# EUROPÄISCHE PATENTANMELDUNG

(11) **EP 2 484 899 A1**
(43) Veröffentlichungstag der Anmeldung: **08.08.2012**
(21) Anmeldenummer: 11075141.9
(22) Anmeldetag: 18.06.2011
(51) Int. Cl.: F03D 3/06

(54) **Vorrichtung zur Energiegewinnung aus strömenden Medien**

(30) Priorität: 03.02.2011 DE 102011010929
(71) Anmelder: Petersen, Olaf, 15910 Unterspreewald (DE)
(72) Erfinder: Petersen, Olaf, 15910 Unterspreewald (DE)
(74) Vertreter: Müller, Matthias

(57) **Zusammenfassung**

Die Erfindung betrifft eine Vorrichtung zur Energiegewinnung aus strömenden Medien, insbesondere eine Windkraftanlage, mit einem sich um eine überwiegend rechtwinklig zur Strömung angeordnete Achse drehenden Rotor.

Sie ist besonders geeignet, Windkraftanlagen auf Flachdächern zu errichten. Ebenso können unter geringfügiger Abänderung auch Wasserströmungen genutzt werden.

Die Aufgabe der Erfindung, eine Strömungskraftanlage mit vertikaler Rotorachse vorzuschlagen, bei der die Rotorflügel klappenartig, in Abhängigkeit von der Windrichtung aufgerichtet oder flachgelegt werden, die eine hohe mechanische Stabilität aufweist und dadurch in der Lage ist, große Strömungsenergien aufzufangen wird durch eine Vorrichtung gelöst, die aus einem Untergestell (1) mit der darin angeordneten Vorrichtung (3) zur Aufnahme und Umwandlung der Rotationsenergie und dem darüber angeordneten Rotor (2) besteht. Das Untergestell weist an seiner Oberseite eine Laufschiene (11) auf, die kreisförmig und zentrisch um die Rotorachse (31) verläuft. Als Vorrichtung (3) zur Aufnahme und Umwandlung der Rotationsenergie kann ein herkömmlicher Generator zur Stromerzeugung über die Achse (31) mit dem Rotor verbunden sein. Der Rotor besteht aus einem Rotorgestell (5, 51) und den daran mittels Scharnieren (61) angelenkten Rotorblättern (6). An der Unterseite des Rotorgestells (5, 51) sind Laufrollen angeordnet, die auf der Laufschiene (11) laufen. Diese Laufrollen (41) können direkt an den radialen Tragstreben (5) befestigt sein. Es ist jedoch vorteilhafter, wenn parallel zur Laufschiene (11) ein Rahmen (4) die Tragstreben (5) verbindet, an dem unten die Laufrollen (41) befestigt sind. Auf den Tragstreben (5) sind mit einem Klappmechanismus die Rotorblätter (6) so befestigt.

## Beschreibung

Die Erfindung betrifft eine Vorrichtung zur Energiegewinnung aus strömenden Medien, insbesondere eine Windkraftanlage, mit einem sich um eine überwiegend rechtwinklige zur Strömung angeordnete Achse drehenden Rotor.

Sie ist besonders geeignet, Windkraftanlagen aus Flachdächern zu errichten. Ebenso können unter geringfügiger Abänderung auch Wasserströmungen genutzt werden.

Bei bekannten Windkraftanlagen mit einem um eine senkrechte Achse kreisenden Rotor wird, wie leicht einzusehen ist, stets nur die Hälfte der Rotorblätter von der Strömung getrieben, während die andere Hälfte sich gegen die Strömung bewegt.

Die dabei zu nutzende Energie ergibt sich aus der Differenz der Strömungswiderstände der in der Strömungsrichtung laufenden Rotorblätter zu den gegen die Strömungsrichtung laufenden Rotorblättern. Diese Differenz wird im einfachsten Falle durch eine Wölbung der Rotorblätter erzielt. Hierbei wird der Effekt ausgenutzt, dass konkave Flächeneinen höheren Luftwiderstand haben als konvexe. Damit können relativ schnell drehende Rotoren gestaltet werden, deren Drehmoment und Wirkungsgrad jedoch relativ gering ist. Derartige Rotoren werden deshalb vor allem als Lüfterantrieb eingesetzt.

Um höhere Drehmomente zu erzielen und damit Energie zu gewinnen, werden die einzelnen Rotorblätter oft mit einem Klappenmechanismus versehen, der es erlaubt, den Widerstand des gegen die Strömung laufenden Rotorblattes stark zu reduzieren.

Der in der DE 102008027241 A1 vorgestellte Rotor für eine vertikale Windkraftanlage umfasst mindestens einen Rotorflügel, der als Widerstandsläufer ausgebildet ist. Dieser Rotorflügel verfügt über mindestens eine Klappe, welche sich verschließt, wenn der den Rotorflügel antreibende Wind auf die nach einer Drehung dem Wind zugewandte Rückseite des Rotorflügels trifft.

Ein windrichtungsunabhängiges Flügelrad mit vertikaler Achse wird in der DE 36 02 414 A1 vorgestellt. Hier soll zur verstärkten Nutzung der anfallenden Windenergie ein Leichtmetallrahmen-Rotorflügel mit schwenkbarem Luftstromdurchlassklappen aus Leichtmetall-Wellschichtelementen, witterungsbeständigen Kunststoff-Hartschaumplatten o. ä. gefertigt werden. Dadurch sollen die Luftstromdurchlassklappen durch die Windkraft in jeder Umdrehungsphase eine optimale Klappenstellung für die Energieumwandlung einnehmen.

In der DE 103 01 922 B3 wird eine Windkraftanlage mit vertikaler Rotorachse senkrecht zur Windrichtung vorgeschlagen, die mir Rotorflügeln ausgestattet ist, die klappenartige, in Abhängigkeit von der Windrichtung sich öffnende oder schließende Flügellamellen aufweisen. Diese kann zum Antrieb eines Generators, für ein Kleinkraftwerk eingesetzt werden. Eine derartige Windkraftanlage ist gekennzeichnet durch einen zweiteiligen Rotorflügel, der einen starr mit der Rotorachse verbundenen Stützrahmen mit einer Winddurchlässigen Gitterkonstruktion als Stützfläche zum Abstützen der Flügellamellen in Windrichtung aufweist. Parallel zu dem Stützrahmen ist ein kongruenter Flügelrahmen vorgesehen, der mit einer Vielzahl von in Windrichtung frei beweglichen Flügellamellen versehen und in seiner Relativlage gegenüber dem Stützrahmen beweglich gelagert ist. Durch Leichtbau und Verringerung des Materialaufwands ist die Erhöhung der Betriebssicherheit erforderlich, was die Anpassung der Windkraftanlage an die jeweilige Windgeschwindigkeit und ein windstärkenabhängiges Bremsen der Rotorflügel zur Starkwindsicherung erforderlich macht.

Auch in der DE 93 17 364 U1 wird eine horizontale Windkraftanlage beschrieben, die der ein Klappensystem zum Einsatz kommt, bei dem zum Antrieb an einem Holz-, Metall- oder Kunststoffträger ein bzw. bei Doppelklappen zwei Klappen durch Scharniere befestigt sind. Die Klappen können aus o. g. Materialien hergestellt werden. Alle Klappen sollen mit Ausgleichsgewichten zur selbsttätigen Öffnung ausgerüstet werden. Durch Stoßdämpfer an den Trägern ist gemäß der Erfindung die Schlagbewegung der Klappen zu dämpfen. Bei der Pendelklappe dreht sich die Klappe selbst auf dem Träger und wird in Lagern geführt.

Eine weitere Variante wird in der DE 2103 08 952 U1 vorgestellt. In dieser als gattungsbildend angesehenen Schrift sollen die Rotorblätter nicht starr, sondern durch Scharniere beweglich angeordnet werden. Durch die einwirkende Windkraft werden beim windseitigen Rotorblatt auf der hinteren Seite auf beiden Seiten Flügel aufgeklappt, welche dem Flügel eine größere Breite geben und somit eine höhere Ausnutzung der Windkraft sichern. Ist das Rotorblatt mit den aufgeklappten Flügeln bis zu einem Punkt befördert worden, an dem es sich wieder zurück - und somit gegen die Windrichtung - dreht, klappen die Seitenflügel durch den druck des Gegenwindes automatisch wieder ein. Auf diese Weise wird dem Flügel, der dem Wind zugewandt ist durch den zurückdrehenden Flügel nur wenig Energie genommen.

Schließlich wird in der DE 39 33 531 A1 vorgeschlagen, einen Strömungsrotor mit senkrechter Achse und ebensolchen Klappen zu errichten, der ein Gitter aufweist, das ein bestimmtes Profil vorgibt. Gemäß dieser Erfindung ist totale Verstellbarkeit von allem und jedem möglich. Gleichzeitig wird damit eine Sturmsicherungsmaßnahme ermöglicht. Zur Steigerung des Wirkungsgrades des Rotors soll ein spezieller Strömungsgang vorgeschlagen werden. Die Unwuchtprobleme werden durch Einsatz einer Spezialklappe behoben. Ein solcher Rotor ist bereits mit einfachsten Mitteln aus dem Baumarkt herstellbar und kann auf Dächern z. B. als mobiles Gerät auf dem Campingplatz und am Strand eingesetzt werden.

Nachteil aller zuvor aufgezeigten Lösungen ist die hohe mechanische Belastung der Rotorachse, die dadurch entsteht, das lediglich auf der mit dem Wind laufenden Seite Kräfte in den Rotor eingetragen werden.

Die Achse und ihre Lagerung sind zusätzlich zu dem Drehmoment, das auf den Generator übertragen werden soll, Kräften ausgesetzt, die als ständig die Richtung wechselndes Biegemoment die Achse und Lager belasten.

Aufgabe der Erfindung ist es somit, eine Strömungskraftanlage mit vertikaler Rotorachse vorzuschlagen, bei der die Rotorflügel Klappenartig, in Abhängigkeit von der Windrichtung aufgerichtet oder flachgelegt werden, die eine hohe mechanische Stabilität aufweist und dadurch in der Lage ist, große Stromungsenergien aufzufangen. Weiterhin soll die Anlage in der Lage sein, die gewonnen Energie auch bei diskontinuierlicher Strömung relativ kontinuierlich an den Verbraucher abzugeben.

Eine erfindungsgemäße Vorrichtung zur Energiegewinnung aus strömenden Medien, insbesondere eine Windkraftanlage, mit einem sich um eine überwiegend rechtwinklig zur Strömung angeordnete3 Achse drehenden Rotor kann entsprechend der im Hauptanspruch beschriebenen Merkmale errichtet werden. Durch die in den weiteren Ansprüchen dargestellten Merkmaler ist eine weitere Verbesserung der Effektivität zu erreichen.

Die erfindungsgemäße Vorrichtung besteht aus einem Untergestell (1), mit der darin angeordneten Vorrichtung (3) zur Aufnahme und Umwandlung der Rotationsenergie und dem darüber angeordneten Rotor (2). Das Untergestell weißt an seiner Oberseite eine Laufschiene (11) auf, die kreisförmig und zentrisch um die Rotorachse (31) verläuft. Als Vorrichtung (3) zur Aufnahme und Umwandlung der Rotationsenergie kann ein herkömmlicher Generator zur Stromerzeuger über der Achse (31) mit dem Rotor verbunden sein. Als vorteilhafte Lösung wird jedoch durch die Erfindung vorgeschlagen, durch die Rotorachse einen bekannten Kompressor antreiben zu lassen. Die damit erzeugte Druckluft kann sofort zum Antrieb von Arbeitsmaschinen oder Generatoren verwendet werden. Alternativ ist es auch möglich, die Druckluft in Drucklufttanks zu speichern und aus diesen die Energie bedarfsgerecht zu entnehmen. Damit können dann druckluftgetriebene Werkzeuge versorgt werden. Ebenso ist es jedoch möglich, damit unabhängig von der Stärke der jeweiligen Strömung kontinuierlich über eine Turbine Stromerzeuger zu betreiben.

Der Rotor besteht aus einem Rotorgestell (5, 51) und den daran mittels Scharnieren (61) angelenkten Rotorblättern (6). An der Unterseite des Rotorgestells (5, 51) sind Laufrollen angeordnet, die auf der Laufschiene (11) laufen. Diese Laufrollen (41) können direkt an den radialen Tragstreben (5) befestigt sein. Es ist jedoch vorteilhafter, wenn parallel zur Laufschiene (11) ein Rahmen (4) die Tragstreben (5) verbindet, an dem unten die Laufrollen (41) befestigt sind. Auf den Tragstreben (5) sind mit einem Klappmechanismus die Rotorblätter (6) so befestigt, dass sie durch eine geringe Kraft aus einer senkrechten Arbeitsstellung in eine annähernd waagerechte Lage umgeklappt werden können. Dazu können auf den Tragstreben (5) Scharnierträger befestigt sein, an deren oberem Ende mit Hilfe von Scharnieren (61) die Rotorblätter (6) angelenkt sind. Alternativ ist es möglich, dass eine Kippachse (51) parallel zur jeweiligen Tragstrebe (5) angeordnet wird, die an einem Ende in einer Verlängerung der Rotorachse (31) und am anderen Ende in einem Stützbock (52), der sich vom Ende der Tragstreben (5) senkrecht nach oben erstreckt, gelagert ist. An dieser Kippachse (51) ist das jeweilige Rotorblatt (6) so angelenkt, dass sich der Flächenschwerpunkt oberhalb des Gelenkes befindet. Dadurch wird eine Strömung, die aus der Richtung der Gelenke auf die Rotorblätter (6) trifft, den größten Teil der Kraft oberhalb der Gelenke erzeugen, so dass ein Drehmoment entsteht, dass die Rotorblätter (6) an unterhalb der Gelenke vorhandene Anschläge presst.

Diese Anschläge können sowohl durch die Scharnierträger als auch durch den Stützbock (52) gebildet werden.

Dabei ist durch geeignete Vorkehrungen dafür gesorgt, dass die Rotorblätter (6) ohne äußere Krafteinwirkung senkrecht oder zumindest annähernd senkrecht ausgerichtet sind. Das kann dadurch erreicht werden, dass durch die mechanische Gestaltung der Rotorblätter (6) der Schwerpunkt derselben geringfügig unterhalb der Scharniere (61) angeordnet wird, indem beispielsweise an der Unterkante der Rotorblätter (6) eine zusätzliche Versteifung (62) angebracht wird, die durch ihr Gewicht zur gewünschten Schwerpunktverlagerung führt. Wie leicht einzusehen, kann aber auch eine zusätzlich angeordnete Feder die Rotorblätter (6) in senkrechter Lage fixieren.

Wird nun ein Rotorblatt (6) von der dem Gelenk abgewandten Seite angeströmt, kippt es soweit in die Waagrechte, bis durch den Strömungswiderstand in das Rotorblatt (6) eingetragenen Kraft der aufrichtenden Kraft entspricht. Da diese relativ gering gehalten werden kann, wird das entgegen der Strömung laufende Blatt in seiner flachen Lage einen sehr geringen Strömungswiderstand aufweisen.

Die Strömung wird also nur in das Rotorblatt (6) eine Kraft eintragen, die dann vollständig in die Vorrichtung (3) zur Aufnahme und Umwandlung der Rotationsenergie eingetragen werden kann. Hierbei ist es möglich, die Energie als Elektroenergie sofort einem Verbraucher zur Verfügung zustellen oder, wie bereits erwähnt, in Form von Druckluft teilweise oder vollständig zwischenzuspeichern.

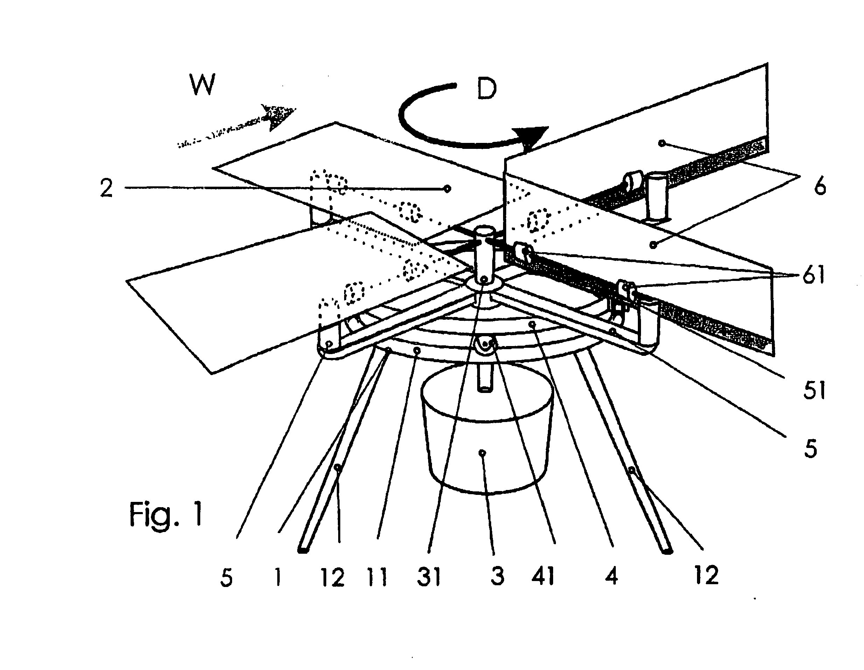

Die Erfindung soll in Weiteren anhand der Zeichnung Fig. 1 in Form eines Ausführungsbeispiels erläutert werden.

Eine erfindungsgemäße Windkraftanlage besteht aus dem Untergestell 1 mit der angeordneten Vorrichtung 3 zur Aufnahme und Umwandlung der Rotationsenergie und dem darüber angeordnetem Rotor 2. Das Untergestell weist an seiner Oberseite eine Laufschiene 11 auf, die kreisförmig und zentrisch um die Rotorachse 31 angeordnet ist. Zur Umwandlung der Rotationsenergie ist ein Generator 3über die Achse 31 mit dem Rotor verbunden. Der Rotor besteht aus einem Rotorgestell 5, 51 und den daran mittels Scharnieren 61 angelenkten Rotorblätter 6. An der Unterseite des Rotorgestells 5 verbindet ein Rahmen 4 die Tragstreben 5, an dem unten die Laufrollen 41 befestigt sind, die auf der Laufschiene 11 umlaufen. Auf den Tragstreben 5 sind mit einem Klappmechanismus die Rotorblätter 6 so befestigt, dass ie durch einen leichten Gegenwind aus einer senkrechten Arbeitsstellung in eine annähernd waagerechte Lage umgeklappt werden können. Dazu ist eine Kippachse 51 parallel zur jeweiligen Tragstrebe 5 angeordnet, die an einem Ende in einer Verlängerung der Rotorachse 31 und am anderen Ende in einem Stützbock 52, der sich vom Ende der Tragstreben 5 senkrecht nach oben erstreckt, gelagert. An dieser Kippachse 51 ist das jeweilige Rotorblatt 6 angelenkt. Dadurch wird der wind, der aus der Richtung der Gelenke auf die Rotorblätter 6 trifft, den größten Teil der Kraft oberhalb der Gelenke erzeugen, so dass ein Drehmoment entsteht, das die Rotorblätter6 an unterhalb der Gelenke an den Stützböcken 52 vorhandene Anschläge presst. Diese Anschläge sind zur Vermeindung von Geräuschen mit einem Dämpfer belegt.

Wenn an der Unterseite eine zusätzliche Versteifung 62 angebracht wird, die durch ihr Gewicht den Schwerpunkt in Richtung Unterkante verlagert, sind die Rotorblätter 6 ohne weitere Krafteinwirkung senkrecht oder zumindest annähernd senkrecht ausgerichtet.

Wird nun ein Rotorblatt 6 von der dem gelenk abgewandten Seite durch den Wind angeströmt, kippt es soweit in die Waagerechte, bis die durch den Strömungswiderstand in das Rotorblatt 6 eingetragene Kraft entspricht. Da diese relativ gering gehalten werden kann, wird das entgegen der Strömung laufende Blatt in seiner flachen Lage einen sehr geringen Strömungswiderstand aufweisen.

Die Strömung wird also nur in das mit dem Wind laufende Rotorblatt 6 eine Kraft eintragen, die dann vollständig im Generator 3 als Elektroenergie sofort einem Verbraucher zur Verfügung steht.

## Patentansprüche

1. Vorrichtung zur Energiegewinnung aus strömenden Medien, insbesondere eine Windkraftanlage, mit einem sich um eine überwiegend rechtwinklig zur Strömung angeordnete Achse drehenden Rotor, der aus einem Untergestell (1) mit der darin angeordneten Vorrichtung (3) zur Aufnahme und Umwandlung der Rotationsenergie und dem darüber angeordneten Rotor (2) besteht, **dadurch gekennzeichnet, dass**
1.1. der Rotor aus dem Rotorgestell (5, 51) und den daran mittels Gelenken (61) um eine waagerechte Achse schwenkbar befestigten Rotorblätters (6) besteht,
1.2. sich der Flächenschwerpunkt der Rotorblätter (6) oberhalb des Gelenkes befindet und Vorkehrungen getroffen sind, die bewirken,
1.2.1. dass die Rotorblätter (6) ohne äußere Krafteinwirkung überwiegend senkrecht ausgerichtet sind,
1.2.2. und mit ihrer Unterkante an Teilen des Rotorgestells (5, 51) anliegen,
1.3. das Untergestell an seiner Oberseite eine Laufschiene (11) aufweist, die kreisförmig und zentrisch um die Rotorachse (31) verläuft,
1.4. an der Unterseite des Rotorgestells (5, 51) Laufrollen angeordnet sind, die auf der Laufschiene (11) laufen,
1.5. weiterhin innerhalb des Gestells eine Vorrichtung (3) zur Aufnahme und Umwandlung der Rotationsenergie angeordnet ist.

2. Vorrichtung nach Anspruch 1, **dadurch gekennzeichnet, dass** das Rotorgestell (5, 51) aus waagerecht und radial zur Achse (3) angeordneten Tragstreben (5) mit darauf aufsitzenden sich nach oben erstreckenden Scharnierträgern besteht, an deren oberen Ende die Rotorblätter (6) angelenkt sind.

3. Vorrichtung nach Anspruch 1, **dadurch gekennziechnet, dass** das Rotorgestell (5, 51) aus waagerecht und radial zur Achse (3) angeordneten Tragstreben (5) besteht, oberhalb derer an einer parallel zur jeweiligen Tragstrebe (5) angeordneten Kippachse (51) die Rotorblätter (6) angelenkt sind, wobei die Kippachse (51) an einem Ende in einer Verlängerung der Rotorachse (31) und am anderen Ende in einem Stützbock (52), der sich vom Ende der Tragstreben (5) senkrecht nach oben erstreckt, gelagert ist.

4. Vorrichtung nach einem der Ansprüche 1 bis 3, **dadurch gekennzeichnet, dass** die Tragstreben (5) durch einen Rahmen (4), der parallel zur Laufschiene (11) verläuft, verbunden ist.

5. Vorrichtung nach einem der Ansprüche 1 bis 3, **dadurch gekennzeichnet, dass** die Laufrollen (41) direkt an den radialen Tragstreben (5) befestigt sind.

6. Vorrichtung nach Anspruch 4, **dadurch gekennzeichnet, dass** die Laufrollen (41) aan dem Rahmen (4) befestigt sind.

7. Vorrichtung nach einem der voranstehenden Ansprüche, **dadurch gekennzeichnet, dass** der Masseschwerpunkt der Rotorblätter (6) geringfügig unterhalb der Scharniere (61) angeordnet ist, indem an der Unterkante der Rotorblätter (6) eine zusätzliche Versteifung (62) als Zusatzmasse angebracht ist.

8. Vorrichtung nach einem der voranstehenden Ansprüche, **dadurch gekennzeichnet, dass** über die Achse (31) ein bekannter Generator zur Stromerzeugung mit dem Rotor verbunden ist.

9. Vorrichtung nach einem der voranstehenden Ansprüche, **dadurch gekennzeichnet, dass** über die Achse (31) ein Kompressor angebunden ist.

10. Vorrichtung nach Anspruch 9, **dadurch gekennzeichnet, dass** die erzeugte Druckluft direkt zu Arbeitsmaschinen oder Generatoren geleitet wird.

11. Vorrichtung nach Anspruch 9, **dadurch gekennzeichnet, dass** die erzeugte Druckluft in Drucklufttanks geleitet wird, aus denen die Energie bedarfsgerecht zu entnehmen ist.

12. Vorrichtung nach einem der voranstehenden Ansprüche, **dadurch gekennzeichnet, dass** als strömendes Medium Wasser genutzt wird.
